# EUROPEAN PATENT SPECIFICATION

(11) **EP 0 490 574 B1**
(45) Date of publication and mention of the grant of the patent: **20.03.1996**
(21) Application number: 91311298.3
(22) Date of filing: 04.12.1991
(51) Int. Cl.: H01G 9/04

(54) **Aluminum foil as electrolytic condenser electrodes**
Aluminiumfolie wie Elektroden von elektrolytischen Kondensator
Feuille d'aluminium par électrodes de condensateur électrolytique

(30) Priority: 11.12.1990 JP 401397/90; 11.12.1990 JP 401399/90; 11.12.1990 JP 401401/90
(43) Date of publication of application: 17.06.1992
(73) Proprietor: SHOWA ALUMINUM KABUSHIKI KAISHA, Sakaishi Osaka (JP)
(72) Inventor: Fujihira, Tadao, Sakaishi, Osaka (JP); Sakaguchi, Masashi, Hirakatashi, Osaka (JP); Tada, Kiyoshi, Neyagawashi, Osaka (JP); Tanio, Makoto, Sakaishi, Osaka (JP); Isoyama, Eizo, Ikomagunn Nara (JP)
(74) Representative: Kerr, Simonne June

(56) References cited:
- DE-C- 889 808
- FR-A- 1 332 351
- PATENT ABSTRACTS OF JAPAN vol. 13, no. 117 (E-731)(3465) 22 March 1989
- CHEMICAL ABSTRACTS, vol. 101, no. 18, October 1984, Columbus, Ohio, US; abstract no. 162275Z,&JP 5992516 (MATSUSHITA ELECTRIC IND CO LTD)' page 654 ;column 1 ;
- JOURNAL OF THE ELECTROCHEMICAL SOCIETY. vol. 132, no. 7, July 1985, MANCHESTER, NEW HAMPSHIRE US pages 1667 - 1671; K. ARAI ET AL: 'EFFECT OF TRACE ELEMENTS OE ETCHING OF ALUMINUM ELECTROLYTIC CAPACITOR FOIL'

## Description

The invention relates to an aluminum foil which is used as the electrodes in electrolytic condensers, and more particularly, which is used as anodes in the middle- or high- voltage electrolytic condensers.

Many research works have been conducted in order that the density of the etching pits may be increased, wherein the etching pits are formed by electrically or electrochemically etching the surfaces of the aluminum foils for use as the electrolytic condenser electrodes so as to increase their effective surface area and thus their capacitance per unit area. Among such recent works, a novel aluminum foil of the kind for use as the electrolytic condenser electrodes is disclosed in JP-A-59-92516, wherein certain metals such as an Sn, In and Pb more electrochemically noble than Al are ion-implanted into a surface layer of the foil and this is subsequently heated. However, such a simple ion-plantation and subsequent heating have failed to enhance the etching property to the aluminum foil. It has rather been observed that the resultant density of those etching pits which were produced in this manner was not so rich as to sufficiently enlarge the effective surface area and to satisfactorily raise the electrostatic capacitance of said foil.

An object of the present invention, which resulted from the present inventors' research conducted along the line suggested in the recently developed technology, is therefore to provide an aluminum foil as the electrolytic condenser electrodes, which foil is formed with its surface layer thus containing such metal elements as to maximize the effective surface area if contained with the must desirable distribution and concentration.

In order to achieve the object, the most suitable auxiliary elements are selected to be distributed at a specifically enriched concentration in the most desirable portion of the aluminum foil.

From one aspect of the invention, the object is achieved with an aluminum foil for use as the electrolytic condenser electrodes, the aluminum foil being composed of 99.9 % or more of aluminum and predetermined amounts of one or more auxiliary elements selected from a group consisting of Cu. Si, Zn, Mn and Ga, with the auxiliary elements being contained in a boundary region disposed between a foil body and an oxide layer thereon at a concentrated state such that an ion strength ratio of the concentration of the auxiliary elements in the boundary region to their concentration in the foil body is from 1.2 : 1 to 30 : 1, wherein 3 - 60 ppm of the selected elements are contained in the interior of the foil body, exclusive of a surface layer of 0.1 µ m in thickness.

The invention will now be described further by way of example, with reference to the accompanying drawings, in which:-
Fig. 1 is a graph showing ion strength data detected through a surface portion of an aluminum foil for use as the electrolytic condenser electrodes, which foil is provided in a first mode of the invention;
Fig. 2 is another graph showing ion strength data similarly detected through a surface portion of a further aluminum foil for use as the electrolytic condenser eletrodes, which foil is provided in a second mode of the invention; and
Fig. 3 is still another graph showing ion strength data also detected through a surface portion of a still further aluminum foil for use as the electrolytic condenser eletrodes, which foil is provided in a third mode of the invention.

### DETAILED DESCRIPTION OF THE INVENTION

### FIRST MODE OF THE INVENTION

In a first mode of the invention, selected elements are concentrated in a boundary region which is disposed between an aluminum foil body and an oxide layer formed thereon.

Aluminum purity in an entirety of a raw foil must be 99.9 % by weight or higher, because a lower purity, that is a higher content of impurities, will hinder the etching pits from growing uniform into deep tunnel-like pits, the electrolytic etching process thereby failing to enhance capacitance. Therefore, it is desired to employ the raw foil containing 99.98 % by weight or more of aluminum.

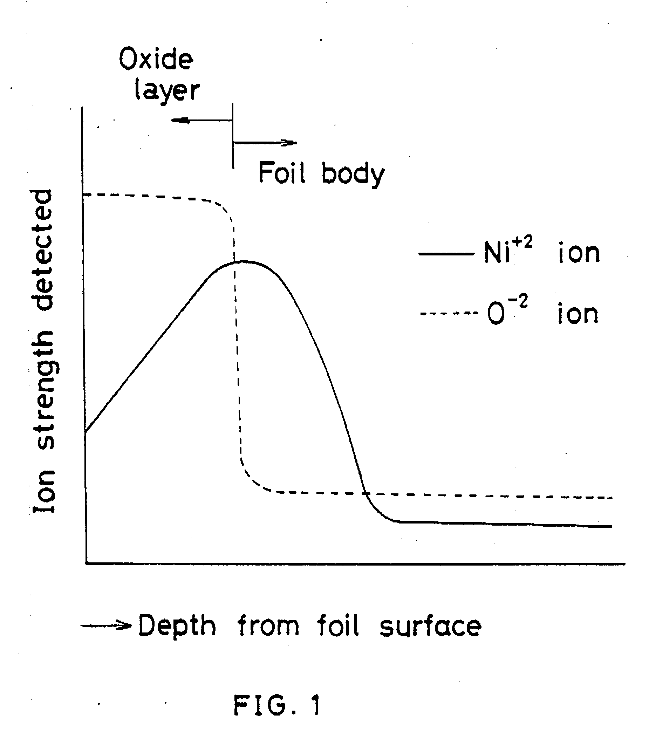

One or more selected elements forming the etching nuclei are contained, as shown in Fig. 1, at a high concentration in the boundary region between the foil body and the oxide layer formed thereon. This state is a key factor to enhance the capacitance of aluminum foil, because such elements concentrated in the boundary region will function as the etching nuclei to produce a sufficient number of the etching pits, which will grow deep into fine tunnels towards the interior of foil. As a result, a larger effective surface area will be obtained.

The concentration of the selected elements in the boundary region and their concentration in the foil body should be in the ion strength ratio 1.2 : 1 to 30 : 1. A concentration below the lower limit will give a so insufficient density of the etching pits that the effective surface area is not increased to a sufficient degree. On the other hand, a concentration above the higher limit will remarkably reduce the corrosion resistance of the foil surface. This will in turn result in an excessively high density of the etching pits, whereby the adjacent pits will merge into huge pits such that a substantially entire surface of the foil will be dissolved into an etching bath and the effective surface area is decreased undesirably. Thus, a more preferable ion strength ratio is about 3 : 1 to 25 : 1. The ion strength ratio may be measured with: Ar⁺ as the primary ion; the beam diameter of 500 µ m; the acceleration voltage of 10 kV; and electric current of 0.3 µ A. For example, the IMA-S type apparatus made by Hitachi Co., Ltd. may be employed for measurement of the ion strength ratio.

The etching nuclei-forming elements, i.e., the auxiliary elements are selected from a group consisting of Cu, Si, Zn, Mn, Ga, P, V, Ti, Cr, Ni, Ta, Zr, C, Be, Pb, In and rare-earth elements. The rare-earth elements herein are seventeen elements which includes fifteen elements having the atomic numbers 57 - 71 ( that is, La, Ce, Pr, Nd, Pm, Sm, Eu, Gd, Tb, Dy, Ho, Er, Im, Yb, and Lu ) in addition to Y (yttrium) and Sc (scandium). These elements in the first mode of the invention are equivalent to each other in respect of their function to improve the surface area-increasing effect of the etching process. It is not necessary to use any selected element alone but two or more elements may be used together. As for the rare-earth elements, the so-called "misch metal (M.M.)", which is produced by electrolysis of a mixture of chlorides of two or more rare-earth elements, may be employed. From a practical point of view, one or more of Y, La, Ce, Pr, Nd, Sm and misch metal may preferably be used in any combination, because they can be procured more easily than the others.

In case of Cu, Si, Zn, Mn and/or Ga being used, it is desirable that these elements are contained at a concentration of 3 - 60 ppm in the foil's inner portion except for an outermost layer having a thickness of 0.1 µ m. In another case of P, V, Ti, Cr, Ni, Ta, Zr, C and/or Be being used, the concentration is desirably set at 1 - 40 ppm, however this concentration being set at 0.01 - 3 ppm in still another case of Pb, In and/or any one or more of rare-earth elements being used. In any case, a concentration below the lower limit will bring about insufficient formation of the etching pits, while a higher concentration above the upper limit causes an excessive etching.

More preferable concentrations are: about 10 - 30 ppm for Cu, Si, Zn, Mn and/or Ga; about 5 - 25 for P, V, Ti, Cr, Ni, Ta, Zr, C and/or Be; and about 0.2 - 1.5 ppm for Pb, In and/or rare-earth elements.

In manufacture of such an aluminum foil that is enriched with the etching nuclei-forming elements distributed in the described manner, predetermined amounts of one or more of the nuclei-forming elements are added to an aluminum ingot which is being molten to be cast through a die. Subsequently, the cast raw sheet will be hot-rolled, intermediate-annealed if necessary, and further rolled to form a raw foil. This raw foil will then be subjected to the final annealing process for example in vacuum at 450 - 550°C for 1 - 30 hours, more preferably at 470 - 520°C for 3 - 10 hours. Finally, the "ion implantation process" is carried out to incorporate predetermined amounts of the elements described above into the boundary region between the foil body and the oxide layer. The amounts of the nuclei-forming elements which have been added to the ingot or implanted to the foil are diffused selectively to the boundary region, so that the specifically concentrated state of said elements takes place in this region in accordance with the invention.

The aluminum foil provided in the first mode for use as the electrolytic condenser electrodes is so excellent in its etching property that its effective surface area is significantly increased in the etching process. If an adequate pretreatment is executed before the etching process, then the etching effect will be improved more remarkably without causing the possible uniform dissolution of its outermost surface layer.

Thus, the etched aluminum foil is given a sufficiently high capacitance, a good electrical property and a high mechanical strength.

### SECOND MODE OF THE INVENTION

In a second mode of the invention, selected elements are concentrated in an outermost portion of an oxide layer which is formed on a foil body.

Aluminum purity in an entire raw foil must be 99.9 % by weight or higher, because similarly to the first mode a lower purity, that is a higher content of impurities, will hinder the etching pits from growing uniform into deep tunnel-like pits, the electrolytic etching process thereby failing to enhance capacitance. Therefore, it is desired to employ the raw foil containing 99.98 % by weight or more of aluminum.

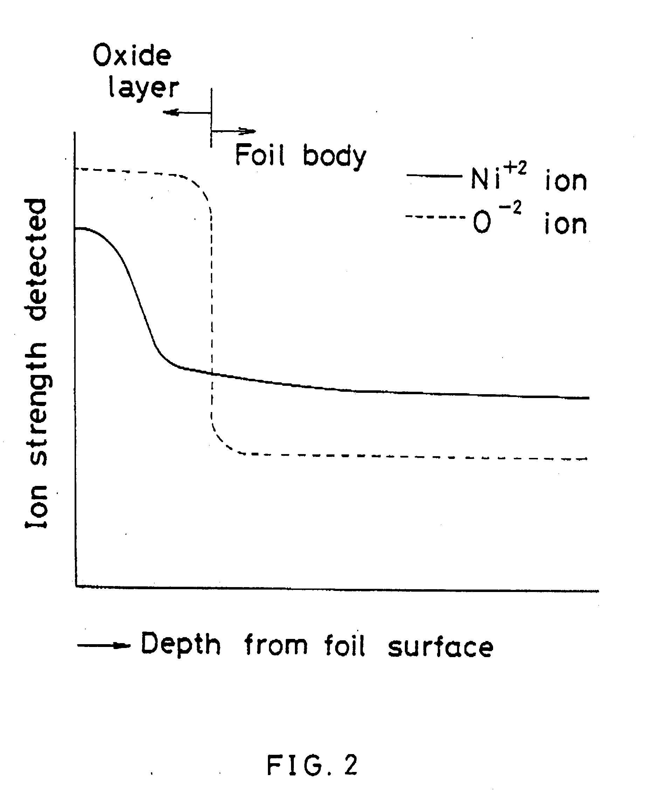

One or more selected elements forming the etching nuclei are contained, as shown in Fig. 2, at a high concentration in the outermost portion of the oxide layer. This state is a key factor, similarly to the first mode, to enhance the capacitance of aluminum foil, because such elements concentrated in the outermost portion of oxide layer on the foil body will behave as a great number of fine defects. At a beginning stage of the etching process, an infinite number of etched pits will originate from the fine defects and successively grow deep into fine tunnels towards the interior of foil. As a result, a larger effective surface area will be obtained on the foil.

The concentration of the selected elements in the outermost portion of oxide layer and their concentration in the foil body should be in the ion strength ratio 1.2 : 1 to 30 : 1. A concentration below the lower limit will give a so insufficient density of the etching pits that the effective surface area is not increased to a sufficient degree. On the other hand, a concentration above the higher limit will remarkably reduce the corrosion resistance of the foil surface. This will in turn result in an excessively high density of the etching pits, whereby the adjacent pits will merge into huge pits such that a substantially entire surface of the foil will be dissolved into an etching bath and the effective surface area is decreased undesirably. Thus, a more preferable ion strength ratio is about 3 : 1 to 25 : 1.

The etching nuclei-forming elements, i.e., the auxiliary elements are selected from the same group as in the first mode, consisting of Cu, Si, Zn, Mn, Ga, P, V, Ti, Cr, Ni, Ta, Zr, C, Be, Pb, In and rare-earth elements. These elements in the second mode of the invention are equivalent to each other in respect of their function to improve the surface area-increasing effect of the etching process. Similarly to the first mode, it is not necessary to use any selected element alone but two or more elements may be used together.

In case of Cu, Si, Zn, Mn and/or Ga being used, it is desirable that these elements are contained at a concentration of 3 - 60 ppm in the foil's inner portion except for an outermost layer having a thickness of 0.1 µ m. In another case of P, V, Ti, Cr, Ni, Ta, Zr, C and/or Be being used, the concentration is desirably set at 1 - 40 ppm, however this concentration being set at 0.01 - 3 ppm in still another case of Pb, In and/or any one or more of rare-earth elements being used. In any case, a concentration below the lower limit will bring about insufficient formation of the etching pits, while a higher concentration above the upper limit causes an excessive etching.

More preferable concentrations are: about 10 - 30 ppm for Cu, Si, Zn, Mn and/or Ga; about 5 - 25 for P, V, Ti, Cr, Ni , Ta, Zr, C and/or Be; and about 0.2 - 1.5 ppm for Pb , In and/or rare-earth elements.

In manufacture of such an aluminum foil that is enriched with the etching nuclei-forming elements distributed in the described manner, predetermined amounts of one or more of the nuclei-forming elements are added to an aluminum ingot which is being molten to be cast through a die. Subsequently, the cast raw sheet will be hot-rolled, intermediate-annealed if necessary, and further rolled to form a raw foil which will be washed thereafter. This raw foil will then be subjected to the annealing process for example in vacuum at 450 - 550°C for 1 - 30 hours, more preferably at 470 - 520°C for 3 - 10 hours. Finally, the "sputtering", "wet plating" or "ion implantation process" is carried out to apply predetermined amounts of the elements to the outer surface of the foil. This foil will be subjected to the re-heating process for example in vacuum at 300 - 550°C for 0.2 - 10 hours, more preferably at 400 - 500°C for 1 - 3 hours. Due to the re-heating, the amounts of the nuclei-forming elements which have been added to the ingot or applied to the foil surface are selectively concentrated in the outermost portion of the oxide layer, so that the specifically concentrated state of said elements takes place in this portion in accordance with the invention.

The aluminum foil provided in the second mode for use as the electrolytic condenser electrodes is so excellent in its etching property that its effective surface area is significantly increased in the etching process. Particularly, in a case wherein any pretreatment is executed before the etching process, the etching effect will be improved more remarkably without causing the possible uniform dissolution of its outermost surface layer.

Thus, the etched aluminum foil is given a sufficiently high capacitance, a good electrical property and a high mechanical strength.

### THIRD MODE OF THE INVENTION

In a third mode of the invention, selected elements are concentrated not only in a boundary layer between a foil body and an oxide layer, but also in an outermost portion of the oxide layer.

Aluminum purity in an entire raw foil must be 99.9 % by weight or higher, because similarly to the first and second modes a lower purity, that is a higher content of impurities, will hinder the etching pits from growing uniform into deep tunnel-like pits, the electrolytic etching process thereby failing to enhance capacitance. Therefore, it is desired to employ the raw foil containing 99.98 % by weight or more of aluminum.

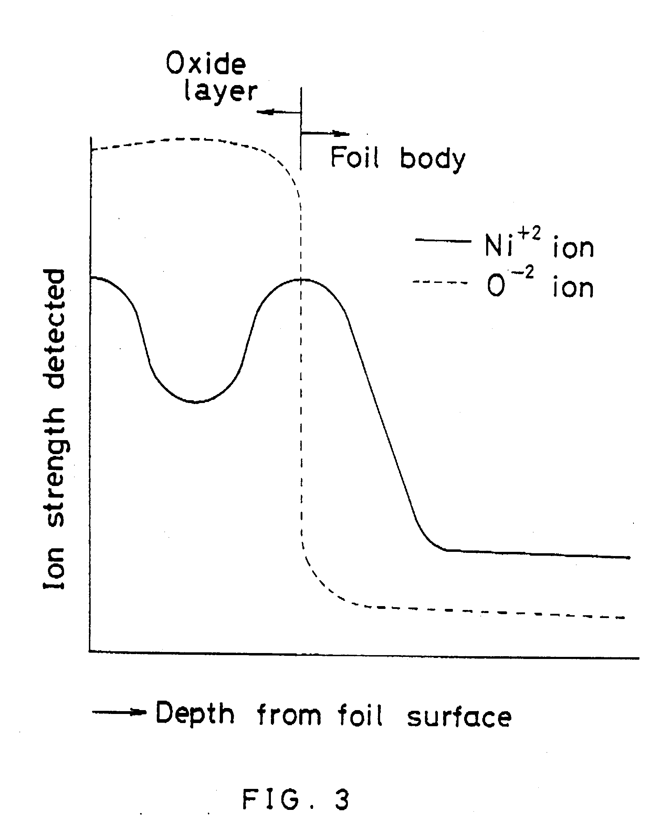

One or more selected elements forming the etching nuclei are contained, as shown in Fig. 3, at a high concentration in the oxide layer. This state is a key factor, similarly to the first and second modes, to enhance the capacitance of aluminum foil, because such elements concentrated in the boundary region and the outermost portion of oxide layer on the foil body will behave as a great number of fine defects. At a beginning stage of the etching process, an infinite number of etched pits will originate from the fine defects and successively grow into fine tunnels towards the interior of foil. As the fine tunnels reach the boundary region between the oxide layer and the foil body, the concentrated amounts of the elements contained there will also function as the etching nuclei so that the etching pits grow deeper towards the interior of the foil body. Consequently, a much larger effective surface area will be obtained.

The concentration of the selected elements contained in the boundary region and the oxide layer outermost portion and their concentration in the foil body should be in the ion strength ratio 1.2 : 1 to 30 : 1. A concentration below the lower limit will give a so insufficient density of the etching pits that the effective surface area is not increased to a sufficient degree. On the other hand, a concentration above the higher limit will remarkably reduce the corrosion resistance of the foil surface. This will in turn result in an excessively high density of the etching pits, whereby the adjacent pits will merge into huge pits such that a substantially entire surface of the foil will be dissolved into an etching bath and the effective surface area is decreased undesirably. Thus, a more preferable ion strength ratio is about 3 : 1 to 25 : 1.

The etching nuclei-forming elements, i.e., the auxiliary elements are selected from a group consisting of Fe, Cu, Si, Zn, Mn, Ga, P, V, Ti, Cr, Ni, Ta, Zr, C, Be, B, Mg, Pb, In, Bi and rare-earth elements.

These elements in the third mode of the invention are equivalent to each other in respect of their function to improve the surface area-increasing effect of the etching process. Similarly to the first and second modes, it is not necessary to use any selected element alone but two or more elements may be used together.

In case of Fe, Cu, Si, Zn, Mn and/or Ga being used, it is desirable that these elements are contained at a concentration of 3 - 60 ppm in the foil's inner portion except for an outermost layer having a thickness of 0.1 µm. In another case of P, V, Ti, Cr, Ni, Ta, Zr, C, Be, B and/or Mg being used, the concentration is desirably set at 1 - 40 ppm, however this concentration being set at 0.01 - 3 ppm in still another case of Pb, In, Bi and/or any one or more of rare-earth elements being used. In any case, a concentration below the lower limit will bring about insufficient formation of the etching pits, while a higher concentration above the upper limit causes an excessive etching.

More preferable concentrations are: about 10 - 30 ppm for Fe, Cu, Si, Zn, Mn and/or Ga; about 5 - 25 for P, V, Ti, Cr, Ni, Ta, Zr, C, Be, B and/or Mg; and about 0.2 -1.5 ppm for Pb, In, Bi and/or rare-earth elements.

In manufacture of such an aluminum foil that is enriched with the etching nuclei-forming elements distributed in the described manner, predetermined amounts of one or more of the nuclei-forming elements are added to an aluminum ingot which is being molten to be cast through a die. Subsequently, the cast raw sheet will be hot-rolled, intermediate-annealed if necessary, and further rolled to form a raw foil. This raw foil will then be subjected to the annealing process for example in vacuum at 450 - 550°C for 1 - 30 hours, more preferably at 470 - 520°C for 3 - 10 hours. Thereafter, the "ion implantation process" is executed to implant predetermined amounts of selected elements into the foil body and the boundary region region between it and the oxide layer, before the "sputtering" or "wet plating" is carried out to apply predetermined amounts of the elements to the outer surface of the foil. Finally, this foil will be subjected to the final heating process for example in vacuum at 200 - 550°C for 0.2 - 10 hours, more preferably at 300 - 500°C for 1 - 3 hours. Due to the final heating, the amounts of the nuclei-forming elements which have been added to the ingot or implanted to the foil are selectively concentrated in the boundary region, while the amounts of said elements successively applied to foil surface are concentrated in the outermost portion of the oxide layer, so that the specifically concentrated state of said elements takes place in these region and portion in accordance with the invention.

The aluminum foil provided in the third mode for use as the electrolytic condenser electrodes is so excellent in its etching property that its effective surface area is significantly increased in the etching process. Because there are two regions or portions where the selected elements are concentrated, the etching effect will be improved remarkably without causing the possible uniform dissolution of its outermost surface layer, whether any pretreatment is or is not executed before the etching process.

Thus, the etched aluminum foil is given a sufficiently high capacitance, a good electrical property and a high mechanical strength.

### THE PREFERRED EMBODIMENTS

### First Embodiment

An aluminum ingot having a purity of 99.99 % and containing 0.002 % of Si and 0.002 % of Fe was used as a raw material. One or more elements were selected, as shown on Table 1, from a group consisting of: Cu, Si, Zn, Mn, Ga, P, V, Ti, Cr, Ni, Ta, Zr, C, Be, Pb, In and rare-earth elements. After a predetermined amount of each selected element was added to the aluminum ingot, the ingot for each example was molten and cast to form a sheet. The sheets were then hot-rolled, intermediate-annealed, rolled into foils, washed and annealed in vacuum at 490 °c for 4 hours. The thus prepared aluminum foils having a thickness of 0.1 mm were subjected to the ion implantation process so as to implant predetermined amounts of the selected elements described above. The finished samples were then subjected to the measurement of ion strength ratio of the boundary region (between the foil body and the oxide layer thereon) to the interior of foil body (i.e., an inner portion 0.1 µm or more deep from the surface). Conditions for said measurement, which was done using the IMA-S type apparatus made by Hitachi Co., Ltd., were: Ar⁺ as the primary ion; beam diameter of 500 µm; acceleration voltage of 10 kV; and current of 0.3 µA. Results are given on Table 1. Then, these raw foils were to be etched as before used as the electrolytic condenser electrodes.

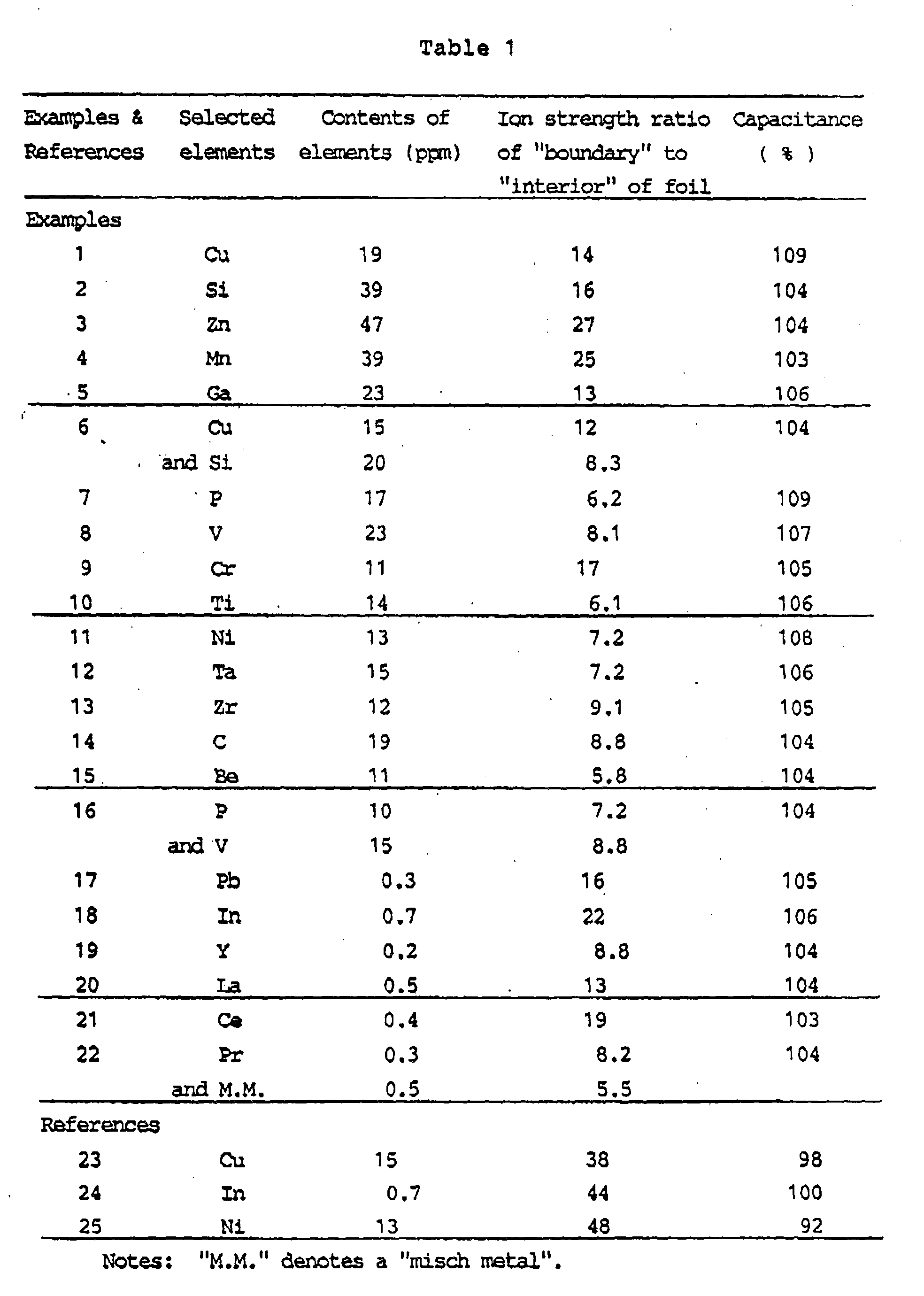

The etching process was as follows. The raw foils were dipped for 2 seconds in a bath of 1 % NaOH at 50°C. Subsequent to this dipping process, the raw foils were subjected to a first etching process at 85°C for 60 seconds in an etching solution of 5 % HCl and 15 % H₂SO₄, with a current density of DC 20 A/dm. Then, the foils were etched again in a second etching process which were conducted at 85°C for 8 minutes in another etching solution of 5% HCl and 0.1 % oxalic acid with a current density of DC 5 A/dm.

The so-called "forming treatment" of the thus etched foils was carried out with a voltage of 380 V. Foils' capacitance were measured. Results are given on Table 1. They were represented in percentage taking the value for the reference No. 24 as 100 %.

As will be seen from Table 1, each electrode foil containing, in the boundary region between the foil body and the oxide layer thereon, one or more etching nuclei-forming elements at a concentration as defined in the invention has a capacitance superior to any reference which contains an excessive amount of said element.

### Second Embodiment

An aluminum ingot having a purity of 99.99 % and containing 0.002 % of Si and 0.002 % of Fe was used as a raw material. One or more elements were selected, as shown on Table 1, from a group consisting of: Cu, Si, Zn, Mn, Ga, P, V, Ti, Cr, Ni, Ta, Zr, C, Be, Pb, In and rare-earth elements. After a predetermined amount of each selected element was added to the aluminum ingot, the ingot for each example was molten and cast to form a sheet. The sheets were then hot-rolled, intermediate-annealed and further rolled into raw aluminum foils having a thickness of 0.1 mm. These foils were washed and annealed in vacuum at 490 °C for 4 hours, subsequently they were subjected to the ion sputtering process so as to apply predetermined amounts of the selected elements to the foil surfaces, and re-heated at 400°C for 1 hour. The finished samples were then subjected to the measurement of ion strength ratio of the surface portion of oxide layer to the interior of foil body (i.e., an inner portion 0.1 µ m or more deep from the surface). Conditions for said measurement, which was done using the IMA-S type apparatus made by Hitachi Co., Ltd., were: Ar⁺ as the primary ion; beam diameter of 500 µ m; acceleration voltage of 10 kV; and current of 0.3 µ A. Results are given on Table 2. These raw foils were to be etched before used as the electrolytic condenser electrodes.

The etching process was as follows. The raw foils were subjected to a first etching process at 85°C for 60 seconds in an etching solution of 5 % HCl and 15 % H₂SO₄, with a current density of DC 20 A/dm.

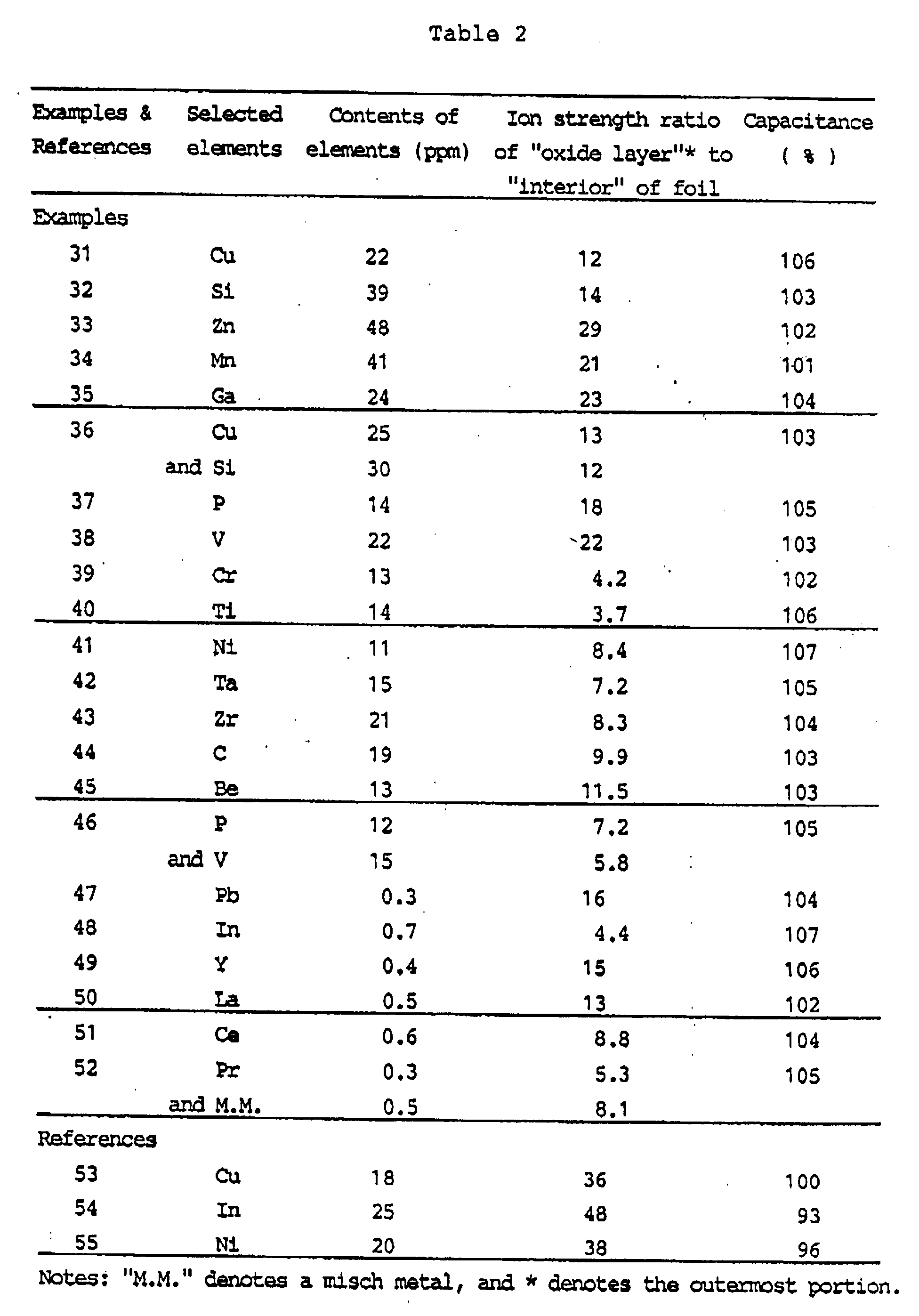

Then, the foils were etched again in a second etching process which were conducted at 85°C for 8 minutes in another etching solution of 5 % HCl and 0.1 % oxalic acid with a current density of DC 5 A/dm.

The so-called "forming treatment" of the thus etched foils was carried out with a voltage of 380 V. Foils' capacitance were measured. Results are given on Table 2. They were represented in percentage taking the value for the reference No. 53 as 100 %.

As will be seen from Table 2, each electrode foil containing, in the surface portion of the oxide layer on the foil body, one or more etching nuclei-forming elements at a concentration as defined in the invention has a capacitance superior to any reference which contains an excessive amount of said element.

### Third embodiment

An aluminum ingot having a purity of 99.99 % and containing 0.002 % of Si and 0.002 % of Fe was used as a raw material. One or more elements were selected, as shown on Table 3, from a group consisting of: Fe, Cu, Si, Zn, Mn, Ga, P, V, Ti, Cr, Ni, Ta, Zr, C, Be, B, Mg, Pb, In, Bi and rare-earth elements. After a predetermined amount of each selected element was added to the aluminum ingot, the ingot for each example was molten and cast to form a sheet. The sheets were then hot-rolled, intermediate-annealed, rolled into raw aluminum foils 0.1 mm thick. These raw foils were annealed for example in vacuum at 490 °C for 4 hours. The thus prepared aluminum foils were subjected to the ion implantation process so as to implant a predetermined amount of the selected elements into the boundary region between the oxide layer and the foil body of each foil. Further, another predetermined amount was applied to each foil surface by the ion ion sputtering method. These foils, which were re-heated thereafter in vacuum at 400°C for 1 hour. These samples were then subjected to the measurement of ion strength ratio of the boundary region (between the foil body and the oxide layer thereon), as well as ion strength ratio of surface portion of oxide layer, to the interior of foil body (i.e., an inner portion 0.1 µm or more deep from the surface). Conditions for said measurement, which was done using the IMA-S type apparatus made by Hitachi Co., Ltd., were: Ar⁺ as the primary ion; beam diameter of 500 µm; acceleration voltage of 10 kV; and current of 0.3 µ A. Results are given on Table 3. These foils were to be etched before used as the electrolytic condenser electrodes.

The etching process was as follows. The aluminum foils were subjected to a first etching process at 85°C for 60 seconds in an etching solution of 5 % HCl and 15 % H₂SO₄, with a current density of DC 20 A/dm.

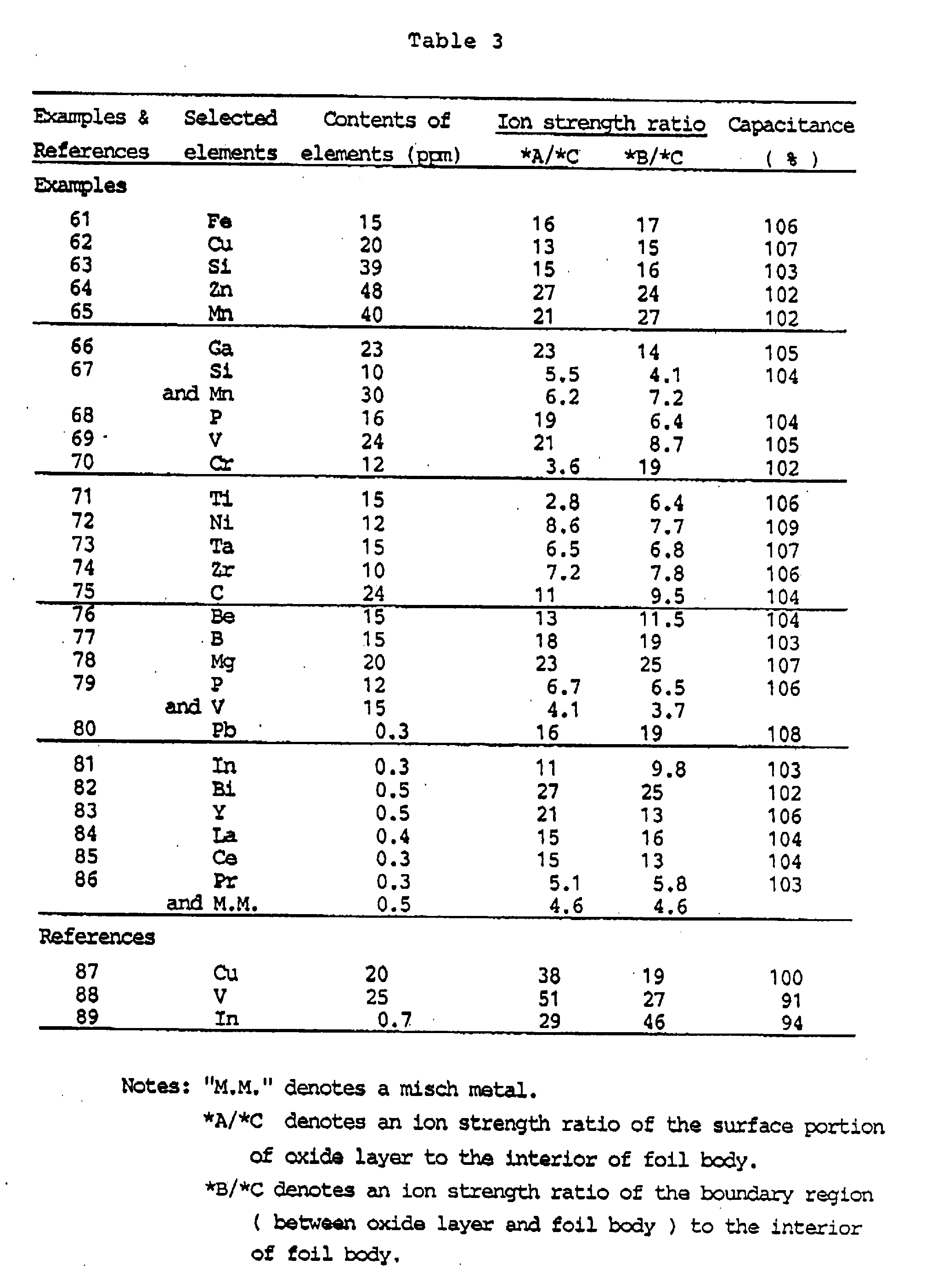

Then, the foils were etched again in a second etching process which were conducted at 85°C for 8 minutes in another etching solution of 5 % HCl and 0.1 % oxalic acid with a current density of DC 5 A/dm.

The so-called "forming treatment" of the thus etched foils was carried out with a voltage of 380 V. Foils' capacitance were measured. Results are given on Table 3. They were represented in percentage of the value for the reference No. 87 as 100 %.

As will be seen from Table 3, each electrode foil containing, not only in the boundary region between the foil body and the oxide layer thereon but also in the surface portion of oxide layer, one or more etching nuclei-forming elements at a concentration as defined in the invention has a capacitance superior to any reference which contains an excessive amount of said element.

## Claims

1. An aluminum foil for use as the electrolytic condenser electrodes, the aluminum foil being composed of 99.9 % or more of aluminum and predetermined amounts of one or more auxiliary elements selected from a group consisting of Cu, Si, Zn, Mn and Ga, with the auxiliary elements being contained in a boundary region disposed between a foil body and an oxide layer thereon at a concentrated state such that an ion strength ratio of the concentration of the auxiliary elements in the boundary region to their concentration in the foil body is from 1.2 : 1 to 30 ; 1, wherein 3 - 60 ppm of the selected elements are contained in the interior of the foil body, exclusive of a surface layer of 0.1 µm in thickness.

2. An aluminum foil for use as the electrolytic condenser electrodes, the aluminum foil being composed of 99.9 % or more of aluminum and predetermined amounts of one or more auxiliary elements selected from a group consisting of P, V, Ti, Cr, Ni, Ta, Zr, C and Be, with the auxiliary elements being contained in a boundary region disposed between a foil body and an oxide layer thereon at a concentrated state such that an ion strength ratio of the concentration of the auxiliary elements in the boundary region to their concentration in the foil body is from 1.2 : 1 to 30 : 1, wherein 1 - 40 ppm of the selected elements are contained in the interior of the foil body, exclusive of a surface layer of 0.1 u m in thickness.

3. An aluminum foil for use as the electrolytic condenser electrodes, the aluminum foil being composed of 99.9 % or more of aluminum and predetermined amounts of one or more auxiliary elements selected from a group consisting of Pb, In and rare-earth elements, with the auxiliary elements being contained in a boundary region disposed between a foil body and an oxide layer thereon at a concentrated state such that an ion strength ratio of the concentration of the auxiliary elements in the boundary region to their concentration in the foil, body is from 1.2 ; 1 to 30 : 1, wherein 0.01 - 3 ppm of the selected elements are contained in the interior of the foil body, exclusive of a surface layer of 0.1 µm in thickness.

4. An aluminum foil for use as the electrolytic condenser electrodes, the aluminum foil being composed of 99.9 % or more of aluminum and predetermined amounts of one or more auxiliary elements selected from a group consisting of Cu, Si, Zn, Mn, Ga, P, V, Ti, et, Ni, Tag Zr, C, Be, Pb, In and rare-earth elements, with the auxiliary elements being contained in a surface portion of an oxide layer formed on a foil body at a concentrated state such that an ion strength ratio of the concentration of the auxiliary elements in the surface portion to their concentration in the foil body is from 1.2 : 1 to 30 : 1.

5. An aluminum foil as claimed in claim 4 wherein the auxiliary elements are selected from group consisting of Cu, Si, Zn, Mn and Ga, and wherein 3 - 60 ppm of the selected elements are contained in the interior of the foil body, exclusive of a surface layer of 0.1 µm in thickness.

6. An aluminum foil as claimed in claim 4 wherein the auxiliary elements are selected from a group consisting of P, V, Ti, Cr, Ni, Ta, Zr**,** C and Be, and wherein 1 - 40 ppm of the selected elements are contained in the interior of the foil body, exclusive of a surface layer of 0.1 in thickness.

7. An aluminium foil as claimed in claim 4 wherein the auxiliary elements are selected from a group consisting of Pb, In and rare-earth elements, and wherein 0,01 - 3 ppm of the selected elements are contained in the interior of the foil body, exclusive of a surface layer of 0.1 µm in thickness.

8. An aluminum foil for use as the electrolytic condenser electrodes, the aluminum foil being composed of 99.9 % or more of aluminum and predetermined amounts of one or more auxiliary elements selected from a group consisting of Fe, Cu, Si, Zn, Mn and Ga, with the auxiliary elements being contained not only in a boundary region disposed between a foil body and an oxide layer thereon but also in a surface portion of the oxide layer at a concentrated state such that an ion strength ratio of the concentration of the auxiliary elements both in the region and the portion to their concentration in the foil body is from 1.2 : 1 to 30 : 1, wherein 3 - 60 ppm of the selected elements are contained in the interior of the foil body, exclusive of a surface layer of 0,1 µm in thickness.

9. An aluminun foil for use as the electrolytic condenser electrifies, the aluminum foil being composed of 99.9 % or more of aluminum and predetermined amounts of one or more auxiliary element selected from a group consisting of P, V, Ti, Cr, Ni, Zr, C, Be, B and Mg, with the auxiliary elements being contained not only in a boundary region disposed between a foil body and an oxide layer thereon but also in a surface portion of the oxide layer at a concentrated state such that an ion strength ratio of the concentration of the auxiliary elements both in the region and the portion to their concentration in the foil body is from 1.2 : 1 to 30 : 1, wherein 1 - 40 ppm of the detected elements are contained in the interior of the foil body, exclusive of a surface layer of 0.1 µm in thickness,

10. An aluminum foil for use as the electrolytic condenser electrodes, the aluminum foil being composed of 99.9 % or more of aluminum and predetermined amounts of one or more auxiliary elements selected from a group consisting of Pb, In, Bi and rare-earth elements, with the auxiliary elements being contained not only in a boundary region disposed between a foil body and an oxide layer thereon but also in a surface portion of the oxide layer at a concentrated state such that an ion strength ratio of the concentration of the auxiliary elements both in the region and the portion to their concentration in the foil body is from 1.2 : 1 to 30 : 1, wherein 0,01 - 3 ppm of the selected elements are contained in the interior of the foil body, exclusive of a surface layer of 0.1 µm in thickness.

## Patentansprüche

1. Aluminiumfolie zur Verwendung als elektrolytische Kondensatorelektrode, die zu mindestens 99,9 % aus Aluminium und aus festgelegten Anteilen eines oder mehrerer zusätzlicher Elemente besteht, die aus einer Gruppe bestehend aus Cu, Si, Zn, Mn und Ga ausgewählt sind, wobei die zusätzlichen Elemente in einem Grenzbereich zwischen einem Folienkörper und einer darauf befindlichen Oxidschicht konzentriert enthalten sind, so daß das Ionenverhältnis der Konzentration der Zusatzelemente im Grenzbereich zu ihrer Konzentration im Folienkörper zwischen 1,2 : 1 und 30 : 1 ist, wobei 3 - 60 ppm der ausgewählten Elemente im Inneren des Folienkörpers unterhalb einer 0,1 µm dicken Oberflächenschicht angeordnet sind.

2. Aluminiumfolie zur Verwendung als elektrolytische Kondensatorelektrode, die zu mindestens 99,9 % aus Aluminium und aus festgelegten Anteilen eines oder mehrerer zusätzlicher Elemente besteht, die aus einer Gruppe bestehend aus P, V, Ti, Cr, Ni, Ta, Zr, C und Be ausgewählt sind, wobei die zusätzlichen Elemente in einem Grenzbereich zwischen einem Folienkörper und einer darauf befindlichen Oxidschicht konzentriert enthalten sind, so daß das Ionenverhältnis der Konzentration der Zusatzelemente im Grenzbereich zu ihrer Konzentration im Folienkörper zwischen 1,2 : 1 und 30 : 1 ist, wobei 1 - 40 ppm der ausgewählten Elemente im Inneren des Folienkörpers unterhalb einer 0,1 µm dicken Oberflächenschicht angeordnet sind.

3. Aluminiumfolie zur Verwendung als elektrolytische Kondensatorelektrode, die zu mindestens 99,9 % aus Aluminium und aus festgelegten Anteilen eines oder mehrerer zusätzlicher Elemente besteht, die aus einer Gruppe bestehend aus Pb, In und seltenen Erdelementen ausgewählt sind, wobei die zusätzlichen Elemente in einem Grenzbereich zwischen einem Folienkörper und einer darauf befindlichen Oxidschicht konzentriert enthalten sind, so daß das Ionenverhältnis der Konzentration der Zusatzelemente im Grenzbereich zu ihrer Konzentration im Folienkörper zwischen 1,2 : 1 und 30 : 1 ist, wobei 0,01 - 3 ppm der ausgewählten Elemente im Inneren des Folienkörpers unterhalb einer 0,1 µm dicken Oberflächenschicht angeordnet sind.

4. Aluminiumfolie zur Verwendung als elektrolytische Kondensatorelektrode, die zu mindestens 99,9 % aus Aluminium und aus festgelegten Anteilen eines oder mehrerer zusätzlicher Elemente besteht, die aus einer Gruppe bestehend aus Cu, Si, Zn, Mn, Ga, P, V, Ti, Cr, Ni, Ta, Zr, C, Be, Pb, In und seltenen Erdelementen ausgewählt sind, wobei die zusätzlichen Elemente in einem Grenzbereich zwischen einem Folienkörper und einer darauf befindlichen Oxidschicht konzentriert enthalten sind, so daß das Ionenverhältnis der Konzentration der Zusatzelemente im Grenzbereich zu ihrer Konzentration im Folienkörper zwischen 1,2 : 1 und 30 : 1 ist.

5. Aluminiumfolie nach Anspruch 4, bei der die zusätzlichen Elemente aus einer Gruppe bestehend aus Cu, Si, Zn, Mn und Ga ausgewählt sind und bei der 3 - 60 ppm der ausgewählten Elemente im Inneren des Folienkörpers unterhalb einer 0,1 µm dicken Oberflächenschicht enthalten sind.

6. Aluminiumfolie nach Anspruch 4, bei der die zusätzlichen Elemente aus einer Gruppe bestehend aus P, V, Ti, Cr, Ni, Ta, Zr, C und Be ausgewählt sind und bei der 1 - 40 ppm der ausgewählten Elemente im Inneren des Folienkörpers unterhalb einer 0,1 µm dicken Oberflächenschicht enthalten sind.

7. Aluminiumfolie nach Anspruch 4, bei der die zusätzlichen Elemente aus einer Gruppe bestehend aus Pb, In und seltenen Erdelementen ausgewählt sind und bei der 0,01 - 3 ppm der ausgewählten Elemente im Inneren des Folienkörpers unterhalb einer 0,1 µm dicken Oberflächenschicht enthalten sind.

8. Aluminiumfolie zur Verwendung als elektrolytische Kondensatorelektrode, die zu mindestens 99,9 % aus Aluminium und aus festgelegten Anteilen eines oder mehrerer zusätzlicher Elemente, die aus einer Gruppe bestehend aus Fe, Cu, Si, Zn, Mn und Ga ausgewählt sind, wobei die zusätzlichen Elemente nicht nur in einem Grenzbereich zwischen einem Folienkörper und einer darauf befindlichen Oxidschicht enthalten sind, sondern ebenfalls soweit in einem Oberflächenabschnitt der Oxidschicht konzentriert sind, daß das Ionenverhältnis der Konzentration der zusätzlichen Elemente sowohl im Bereich als auch im Abschnitt zur Konzentration im Folienkörper zwischen 1,2 : 1 bis 30 : 1 ist, wobei 3 - 60 ppm der ausgewählten Elemente im Inneren des Folienkörpers unterhalb einer 0,1 µm dicken Oberflächenschicht enthalten sind.

9. Aluminiumfolie zur Verwendung als elektrolytische Kondensatorelektrode, die zu mindestens 99,9 % aus Aluminium und aus festgelegten Anteilen eines oder mehrerer zusätzlicher Elemente, die aus einer Gruppe bestehend aus P, V, Ti, Cr, Ni, Ta, Zr, C, Be, B und Mg ausgewählt sind, wobei die zusätzlichen Elemente nicht nur in einem Grenzbereich zwischen einem Folienkörper und einer darauf befindlichen Oxidschicht enthalten sind, sondern ebenfalls soweit in einem Oberflächenabschnitt der Oxidschicht konzentriert sind, daß das Ionenverhältnis der Konzentration der zusätzlichen Elemente sowohl im Bereich als auch im Abschnitt zur Konzentration im Folienkörper zwischen 1,2 : 1 bis 30 : 1 ist, wobei 1 - 40 ppm der ausgewählten Elemente im Inneren des Folienkörpers unterhalb einer 0,1 µm dicken Oberflächenschicht enthalten sind.

10. Aluminiumfolie zur Verwendung als elektrolytische Kondensatorelektrode, die zu mindestens 99,9 % aus Aluminium und aus festgelegten Anteilen eines oder mehrerer zusätzlicher Elemente, die aus einer Gruppe bestehend aus Pb, In, Bi und seltenen Erdelementen ausgewählt sind, wobei die zusätzlichen Elemente nicht nur in einem Grenzbereich zwischen einem Folienkörper und einer darauf befindlichen Oxidschicht enthalten sind, sondern ebenfalls soweit in einem Oberflächenabschnitt der Oxidschicht konzentriert sind, daß das Ionenverhältnis der Konzentration der zusätzlichen Elemente sowohl im Bereich als auch im Abschnitt zur Konzentration im Folienkörper zwischen 1,2 : 1 bis 30 : 1 ist, wobei 0,01 - 3 ppm der ausgewählten Elemente im Inneren des Folienkörpers unterhalb einer 0,1 µm dicken Oberflächenschicht enthalten sind.

## Revendications

1. Film d'aluminium destiné à être utilisé comme électrodes de condensateur électrolytiques, le film d'aluminium étant composé de 99,9 % ou plus d'aluminium et de quantités prédéterminées d'un ou plusieurs éléments auxiliaires choisis parmi le groupe composé de Cu, Si, Zn, Mn et Ga, les éléments auxiliaires étant contenus dans une zone limite disposée entre le corps de film et une couche d'oxyde sur celui-ci, à un état de concentration tel que le rapport de teneur en ions entre la concentration des éléments auxiliaires dans la zone limite et leur concentration dans le corps de film est de 1,2 : 1 à 30 : 1, dans lequel de 3 à 60 ppm des éléments choisis sont contenus à l'intérieur du corps de film, à l'exclusion de la couche superficielle d'une épaisseur de 0,1 µm.

2. Film d'aluminium destiné à être utilisé comme électrodes de condensateur électrolytiques, le film d'aluminium étant composé de 99,9 % ou plus d'aluminium et de quantités prédéterminées d'un ou plusieurs éléments auxiliaires choisis parmi le groupe composé de P, V, Ti, Cr, Ni, Ta, Zr, C et Be, les éléments auxiliaires étant contenus dans une zone limite disposée entre le corps de film et une couche d'oxyde sur celui-ci, à un état de concentration tel que le rapport de teneur en ions entre la concentration des éléments auxiliaires dans la zone limite et leur concentration dans le corps de film est de 1,2 : 1 à 30 : 1, dans lequel de 1 à 40 ppm des éléments choisis sont contenus à l'intérieur du corps de film, à l'exclusion de la couche superficielle d'une épaisseur de 0,1 µm.

3. Film d'aluminium destiné à être utilisé comme électrodes de condensateur électrolytiques, le film d'aluminium étant composé de 99,9 % ou plus d'aluminium et de quantités prédéterminées d'un ou plusieurs éléments auxiliaires choisis parmi le groupe composé de Pb, In et d'éléments des terres rares, les éléments auxiliaires étant contenus dans une zone limite disposée entre le corps de film et une couche d'oxyde sur celui-ci, à un état de concentration tel que le rapport de teneur en ions entre la concentration des éléments auxiliaires dans la zone limite et leur concentration dans le corps de film est de 1,2 : 1 à 30 : 1, dans lequel de 0,01 à 3 ppm des éléments choisis sont contenus à l'intérieur du corps de film, à l'exclusion de la couche superficielle d'une épaisseur de 0,1 µm.

4. Film d'aluminium destiné à être utilisé comme électrodes de condensateur électrolytiques, le film d'aluminium étant composé de 99,9 % ou plus d'aluminium et de quantités prédéterminées d'un ou plusieurs éléments auxiliaires choisis parmi le groupe composé de Cu, Si, Zn, Mn, Ga, P, V, Ti, Cr, Ni, Ta, Zr, C, Be, Pb, In et d'éléments des terres rares, les éléments auxiliaires étant contenus dans une partie de surface d'une couche d'oxyde formée sur le corps de film, à un état de concentration tel que le rapport de teneur en ions entre la concentration des éléments auxiliaires dans la partie de surface et leur concentration dans le corps de film est de 1,2 : 1 à 30 : 1.

5. Film d'aluminium suivant la revendication 4, dans lequel les éléments auxiliaires sont choisis parmi le groupe composé de Cu, Si, Zn, Mn et Ga et dans lequel de 3 à 60 ppm des éléments choisis sont contenus à l'intérieur du corps de film, à l'exclusion de la couche superficielle d'une épaisseur de 0,1 µm.

6. Film d'aluminium suivant la revendication 4, dans lequel les éléments auxiliaires sont choisis parmi le groupe composé de P, V, Ti, Cr, Ni, Ta, Zr, C et Be et dans lequel de 1 à 40 ppm des éléments choisis sont contenus à l'intérieur du corps de film, à l'exclusion de la couche superficielle d'une épaisseur de 0,1 µm.

7. Film d'aluminium suivant la revendication 4, dans lequel les éléments auxiliaires sont choisis parmi le groupe composé de Pb, In et d'éléments des terres rares et dans lequel de 0,01 à 3 ppm des éléments choisis sont contenus à l'intérieur du corps de film. à l'exclusion de la couche superficielle d'une épaisseur de 0,1 µm.

8. Film d'aluminium destiné à être utilisé comme électrodes de condensateur électrolytiques, le film d'aluminium étant composé de 99,9 % ou plus d'aluminium et de quantités prédéterminées d'un ou plusieurs éléments auxiliaires choisis parmi le groupe composé de Fe, Cu, Si, Zn, Mn et Ga, les éléments auxiliaires étant contenus non seulement dans une zone limite disposée entre le corps de film et une couche d'oxyde sur celui-ci, mais également dans une partie de surface de la couche d'oxyde, à un état de concentration tel que le rapport de teneur en ions entre la concentration des éléments auxiliaires tant dans la zone limite que dans la partie de surface et leur concentration dans le corps de film est de 1,2 : 1 à 30 : 1, dans lequel de 3 à 60 ppm des éléments choisis sont contenus à l'intérieur du corps de film, à l'exclusion 5 de la couche superficielle d'une épaisseur de 0,1 µm.

9. Film d'aluminium destiné à être utilisé comme électrodes de condensateur électrolytiques, le film d'aluminium étant composé de 99,9 % ou plus d'aluminium et de quantités prédéterminées d'un ou plusieurs éléments auxiliaires choisis parmi le groupe composé de P, V, Ti, Cr, Ni, Ta, Zr, C et Be, les éléments auxiliaires étant contenus non seulement dans une zone limite disposée entre le corps de film et une couche d'oxyde sur celui-ci, mais également dans une partie de surface de la couche d'oxyde, à un état de concentration tel que le rapport de teneur en ions entre la concentration des éléments auxiliaires tant dans la zone limite que dans la partie de surface et leur concentration dans le corps de film est de 1,2 : 1 à 30 : 1, dans lequel de 1 à 40 ppm des éléments choisis sont contenus à l'intérieur du corps de film, à l'exclusion de la couche superficielle d'une épaisseur de 0,1 µm.

10. Film d'aluminium destiné à être utilisé comme électrodes de condensateur électrolytiques, le film d'aluminium étant composé de 99,9 % ou plus d'aluminium et de quantités prédéterminées d'un ou plusieurs éléments auxiliaires choisis parmi le groupe composé de Pb, In et d'éléments des terres rares, les éléments auxiliaires étant contenus non seulement dans une zone limite disposée entre le corps de film et une couche d'oxyde sur celui-ci, mais également dans une partie de surface de la couche d'oxyde, à un état de concentration tel que le rapport de teneur en ions entre la concentration des éléments auxiliaires tant dans la zone limite que dans la partie de surface et leur concentration dans le corps de film est de 1,2 : 1 à 30 : 1, dans lequel de 0,01 à 3 ppm des éléments choisis sont contenus à l'intérieur du corps de film, à l'exclusion de la couche superficielle d'une épaisseur de 0,1 µm.
